# EUROPÄISCHE PATENTSCHRIFT

(11) **EP 2 536 790 B1**
(45) Veröffentlichungstag und Bekanntmachung des Hinweises auf die Patenterteilung: **25.12.2013**
(21) Anmeldenummer: 11704220.0
(22) Anmeldetag: 16.02.2011
(51) Int. Cl.: C08L 83/04, C07F 7/02, D06M 15/643, C08L 83/05, C08L 83/07

(54) **HÄRTBARE ORGANOPOLYSILOXANMASSEN**
CURABLE ORGANOPOLYSILOXANE COMPOSITIONS
MÉLANGES D'ORGANOPOLYSILOXANES DURCISSABLES

(30) Priorität: 19.02.2010 DE 102010002160
(43) Veröffentlichungstag der Anmeldung: 26.12.2012
(73) Patentinhaber: Wacker Chemie AG, 81737 München (DE)
(72) Erfinder: MÜLLER, Johann, 84524 Neuötting (DE); MERGET, Markus, 84561 Mehring (DE); SCHNITZER, Klaus, 84387 Julbach (DE)
(74) Vertreter: Fritz, Helmut
(86) Internationale Anmeldenummer: PCT/EP2011/052318
(87) Internationale Veröffentlichungsnummer: WO 2011/101392

(56) Entgegenhaltungen:
- DATABASE WPI Week 199014 Thomson Scientific, London, GB; AN 1990-103254 XP002633899, & JP 2 053859 A (SHINETSU CHEM IND CO LTD) 22. Februar 1990 (1990-02-22)

## Beschreibung

Die vorliegende Erfindung betrifft durch Anlagerung von Si-gebundenem Wasserstoff an aliphatische Mehrfachbindung vernetzbare Siliconmassen, die silylierte Zitronensäure enthalten, Verfahren zu deren Herstellung sowie deren Verwendung, insbesondere zur Beschichtung von textilen Flächengebilden.

Additionsvernetzende Siliconmassen härten durch Reaktion aliphatisch ungesättigter Gruppen mit Si-gebundenem Wasserstoff (Hydrosilylierung) in Gegenwart eines Katalysators, typischerweise einer Platin-Verbindung. Es ist vielfach bekannt, additionsvernetzende Massen zur Beschichtung zahlreicher Substrate, wie Kunststoffe, Metalle, mineralische Stoffe und organische Fasern zu verwenden. Dabei müssen die einzelnen Bestandteile der vernetzbaren Massen so abgestimmt werden, dass die Anforderungen für den technischen Einsatz erfüllt werden können. Hierzu sei z.B. auf EP 915 937 B1 verwiesen.

JP 2 053859 A beschreibt vernetzbare Siliconmassen, die durch Anlagerung von Si-gebundenem Wasserstoff an aliphatische Mehrfachbindung vernetzbar sind und silylierte Maleinsäure enthalten.

Gegenstand der vorliegenden Erfindung sind durch Anlagerung von Si-gebundenem Wasserstoff an aliphatische Mehrfachbindung vernetzbare Siliconmassen, die silylierte Zitronensäure enthalten.

Vorzugsweise handelt es sich bei den vernetzbaren Massen um solche enthaltend
(A) Organosiliciumverbindungen, die SiC-gebundene Reste mit aliphatischen Mehrfachbindungen aufweisen,
(B) Organosiliciumverbindungen mit Si-gebundenen Wasserstoffatomen oder anstelle von (A) und (B)
(C) Organosiliciumverbindungen, die SiC-gebundene Reste mit aliphatischen Mehrfachbindungen und Si-gebundene Wasserstoffatome aufweisen,
(D) die Anlagerung von Si-gebundenem Wasserstoff an aliphatische Mehrfachbindung fördernden Katalysator und
(E) Trimethylsilylzitronensäure, Bistrimethylsilylzitronensäure, Tristrimethylsilylzitronensäure oder Tetrakistrimethylsilylzitronensäure enthalten

Im Rahmen der vorliegenden Erfindung sollen von dem Begriff Organopolysiloxane sowohl polymere, oligomere wie auch dimere Siloxane mitumfasst werden, bei denen ein Teil der Siliciumatome durch andere Gruppen als Sauerstoff, wie etwa über -N- oder -C-, miteinander verbunden sein können.

Bei den erfindungsgemäßen Zusammensetzungen kann es sich um Einkomponenten-Organopolysiloxanmassen wie auch um Zweikomponenten-Organopolysiloxanmassen handeln. In letzterem Fall können die beiden Komponenten der erfindungsgemäßen Massen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator enthält. Vorzugsweise handelt es sich bei den erfindungsgemäßen Zusammensetzungen um Zweikomponentenmassen.

Die in den erfindungsgemäßen Massen eingesetzten Verbindungen (A) und (B) bzw. (C) werden bekanntermaßen so gewählt, dass eine Vernetzung möglich ist. Vorzugsweise weist beispielsweise Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den obengenannten Verhältnissen aufweist.

Als Organosiliciumverbindung (A) können alle Organosiliciumverbindungen mit aliphatischer Mehrfachbindung eingesetzt werden, die auch bisher in additionsvernetzbaren Massen eingesetzt worden sind.

Bei den Organosiliciumverbindungen (A) handelt es sich vorzugsweise um Siloxane aus Einheiten der Formel

RₐR¹_{b}SiO_{(4-a-b)/2} (I),

wobei
R gleich oder verschieden sein kann und einen von aliphatischen Kohlenstoff-Kohlenstoff-Mehrfachbindungen freien Rest bedeutet,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder 2 ist
mit der Maßgabe, dass die Summe a+b kleiner oder gleich 3 ist und mindestens 2 Reste R¹ je Molekül vorliegen.

Bei Rest R kann es sich um ein- oder mehrwertige Reste handeln, wobei die mehrwertigen Reste, wie bivalente, trivalente und tetravalente Reste, dann mehrere, wie etwa zwei, drei oder vier, Siloxy-Einheiten der Formel (I) miteinander verbinden.

R umfasst die einwertigen Reste -F, -Cl, -Br, -OR⁶, -CN, -SCN, -NCO und SiC-gebundene, gegebenenfalls substituierte Kohlenwasserstoffreste, die mit Sauerstoffatomen oder der Gruppe -C(O)-unterbrochen sein können, sowie zweiwertige, beidseitig gemäß Formel (I) Si-gebundene Reste.

Falls es sich bei Rest R um SiC-gebundene, substituierte Kohlenwasserstoffreste handelt, sind als Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)-R⁶, -C(O)OR⁶, -SO₂-Ph und -C₆F₅ bevorzugt, wobei R⁶ gleich oder verschieden sein kann und Wasserstoffatom oder einen einwertigen Kohlenwasserstoffrest mit 1 bis 20 Kohlenstoffatomen bedeutet und Ph gleich Phenylrest ist.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der ß-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R¹ kann es sich um beliebige, einer Anlagerungsreaktion (Hydrosilylierung) mit einer SiH-funktionellen Verbindung zugängliche Gruppen handeln.

Falls es sich bei Rest R¹ um SiC-gebundene, substituierte Kohlenwasserstoffreste handelt, sind als Substituenten Halogenatome, Cyanoreste und -OR⁶ bevorzugt, wobei R⁶ eine der obengenannten Bedeutungen hat.

Bevorzugt handelt es sich bei Rest R¹ um Alkenyl- und Alkinylgruppen mit 2 bis 16 Kohlenstoffatomen, wie Vinyl-, Allyl-, 1-Propenyl-, Methallyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und 5-Hexenylreste besonders bevorzugt verwendet werden.

Das Molekulargewicht des Bestandteils (A) kann in weiten Grenzen variieren, etwa zwischen 10 und 10⁶ g/mol, wobei ein Molekulargewicht von 50 bis 500 000 g/Mol bevorzugt ist. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige und/oder endständige Si-gebundene Vinylgruppen verfügendes hochpolymeres Polydimethylsiloxan. Auch die Struktur der den Bestandteil (A) bildenden Moleküle ist nicht festgelegt; insbesondere kann die Struktur eines höhermolekularen, also oligomeren oder polymeren Siloxans, linear, cyclisch oder verzweigt sein.

Besonders bevorzugt als Komponente (A) ist die Verwendung im wesentlichen linearer Polydiorganosiloxane mit einer Viskosität von 20 bis 1 000 000 mm²/s, wobei als Komponente (A) die Verwendung vinylterminierter, im wesentlichen linearer Polydiorganosiloxane mit einer Viskosität von 50 bis 500 000 mm²/s, jeweils bei 25°C, ganz besonders bevorzugt sind.

Als Organosiliciumverbindung (B) können alle hydrogenfunktionellen Organosiliciumverbindungen eingesetzt werden, die auch bisher in additionsvernetzbaren Massen eingesetzt worden sind.

Als Organopolysiloxane (B), die Si-gebundene Wasserstoffatome aufweisen, werden vorzugsweise Organopolysiloxane aus Einheiten der Formel

R²_{c}H_{d}SiO_{(4-c-d)/2} (II)

eingesetzt, wobei
R² gleich oder verschieden sein kann und eine oben für R angegebene Bedeutung hat,
c 0, 1, 2 oder 3 ist und
d 0, 1 oder 2 ist,
mit der Maßgabe, dass die Summe von c+d kleiner oder gleich 3 ist und mindestens zwei, bevorzugt mindestens drei, Si-gebundene Wasserstoffatome je Molekül vorliegen.

Vorzugsweise enthält die erfindungsgemäß eingesetzte Organosiliciumverbindung (B) Si-gebundenen Wasserstoff im Bereich von 0,04 bis 1,7 Gewichtsprozent, bezogen auf das Gesamtgewicht der Organosiliciumverbindung (B).

Das Molekulargewicht des Bestandteils (B) kann ebenfalls in weiten Grenzen variieren, etwa zwischen 10 und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres lineares Polysiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans, linear, cyclisch oder verzweigt sein. Lineare und cyclische Polysiloxane sind vorzugsweise aus Einheiten der Formel R²₃SiO_{1/2}, HR²₂SiO_{1/2}, HR²SiO_{2/2} und R²₂SiO_{2/2} zusammengesetzt, wobei R² die vorstehend angegebene Bedeutung hat.

Besonders bevorzugt als Komponente (B) ist die Verwendung niedermolekularer SiH-funktioneller Verbindungen, wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethyl/hydrogenmethyl)siloxan mit einer Viskosität bei 25°C von 10 bis 10 000 mm²/s, oder analoge SiHhaltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Massen enthalten, dass das Molverhältnis von.SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die sowohl aliphatische Mehrfachbindungen und Si-gebundene Wasserstoffatome aufweisen, enthalten, was jedoch nicht bevorzugt ist.

Falls Siloxane (C) eingesetzt werden, handelt es sich vorzugsweise um solche aus Einheiten der Formel

R³_{f}SiO_{(4-f)/2}, R³_{g}R¹SiO_{(3-9)/2} und R³ₕHSiO_{(3-g)/2},

wobei R³ gleich oder verschieden sein kann und eine für R ange1 gebene Bedeutung hat und R¹ die oben dafür angegebene Bedeutung hat,
f 0, 1, 2 oder 3 ist,
g 0, 1 oder 2 ist und
h 0, 1 oder 2 ist,
mit der Maßgabe, dass je Molekül mindestens 2 Reste R¹ und mindestens 2 Si-gebundene Wasserstoffatome vorliegen.

Beispiele für Organopolysiloxane (C) sind lineare Organopolysiloxane im Wesentlichen bestehend aus R³₂R¹SiO_{1/2}-, R³₂SiO- und R³HSiO-Einheiten mit R³ und R¹ gleich den obengenannten Bedeutungen.

Die Organopolysiloxane (C) besitzen vorzugsweise eine durchschnittliche Viskosität von 20 bis 1 000 000 mm²/s, besonders bevorzugt 50 bis 500 000 mm²/s, jeweils bei 25°C. Organopolysiloxane (C) sind nach in der Chemie gängigen Methoden herstellbar.

Als erfindungsgemäß eingesetzte Komponente (D) können alle Katalysatoren verwendet werden, die auch bisher in durch Anlagerung von Si-gebundenem Wasserstoff an aliphatische Mehrfachbindung vernetzbaren Massen eingesetzt worden sind.

Bevorzugt handelt es sich bei Komponente (D) um Hydrosilylierungskatalysatoren aus der Gruppe 8, 9 oder 10 im Periodensystem. Hierbei können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, Aluminiumoxid oder Siliciumdioxid, fixiert sein.

Vorzugsweise werden als Hydrosilylierungskatalysatoren (D) Platin und Platinverbindungen verwendet, wobei es sich besonders bevorzugt um solche Platinverbindungen handelt, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, wie z.B. (Ph₃P)₂PtCl₂. Besonders bevorzugt als Komponente (D) sind Komplexe des Platins mit Vinylsiloxanen, wie sym-Divinyltetramethyldisiloxan.

Die Menge des erfindungsgemäß eingesetzten Hydrosilylierungskatalysators (D) richtet sich nach der gewünschten Vernetzungsgeschwindigkeit und der jeweiligen Verwendung sowie ökonomischen Gesichtspunkten. Die erfindungsgemäßen Massen enthalten Platin-katalysatoren (D) vorzugsweise in solchen Mengen, dass ein Platingehalt von 0,01 bis 1000 Gewichts-ppm (= Gewichtsteile je Million Gewichtsteile), besonders bevorzugt 0,05 bis 500 Gewichts-ppm, insbesondere 0,1 bis 100 Gewichts-ppm, jeweils bezogen auf das Gesamtgewicht der erfindungsgemäßen Masse, resultiert.

Bei den erfindungsgemäß eingesetzten Substanz (E) handelt es sich um silylierte Zitronensäure.

Vorzugsweise handelt es sich bei der erfindungsgemäßen sylilierten Zitronensäure um solche der Formel A-OC(COOA)(CH₂COOA)₂ (III),
wobei A = H oder SiR₃ ist, mit der Maßgabe, dass zumindest ein A die Bedeutung von SiR₃ hat und R ein Kohlenwasserstoffrest mit vorzugsweise 1 bis 10 C Atomen, bevorzugt 1 bis 4 C Atomen, besonders bevorzugt 1 bis 2 C Atomen ist.

Bevorzugte sylilierte Zitronensäuren sind Trimethylsilylzitronensäure, Bistrimethylsilylzitronensäure, Tristrimethylsilylzitronensäure oder Tetrakistrimethylsilylzitronensäure, Triethylsilylzitronensäure, Bistriethylsilylzitronensäure, Tristriethylsilylzitronensäure, Tetrakistriethylsilylzitronensäure, Tripropylsilylzitronensäure, Bistripropylsilylzitronensäure, Tristripropylsilylzitronensäure, Tetrakistripropylsilylzitronensäure, Tributylsilylzitronensäure, BistributylsilylZitronensäure, Tristributylsilylzitronensäure, Tetrakistributylsilylzitronensäure, bevorzugt sind Trimethylsilylzitronensäure, Bistrimethylsilylzitronensäure, Tristrimethylsilylzitronensäure, Tetrakistrimethylsilylzitronensäure,besonders bevorzugt ist Tetrakistrimethylsilylzitronensäure.

Vorzugsweise ist die erfindungsgemäß eingesetzte Substanz (E) vorzugsweise in Mengen von 0,001 Gewichtsteilen bis 10 Gewichtsteilen, bevorzugt 0,01 Gewichtsteilen bis 5 Gewichtsteilen, besonders bevorzugt 0,1 bis 3 Gewichtsteile in den Massen enthalten, jeweils bezogen auf 100 Gewichtsteile Komponente (A).

Außer den Komponenten (A) bis (E) können die erfindungsgemäßen härtbaren Zusammensetzungen alle Komponenten enthalten, die auch bisher zur Herstellung von additionsvernetzbaren Massen eingesetzt wurden, wie beispielsweise Inhibitoren (F), Füllstoffe (G), Haftvermittler (H) sowie weitere Stoffe (I), ausgewählt aus Lösungsmitteln, Pigmenten, Farbstoffen, Weichmachern, organischen Polymeren, Hitzestabilisatoren und Duftstoffen.

Bei den gegebenenfalls eingesetzten Inhibitoren (F) handelt es sich um Zusätze, die der gezielten Einstellung der Verarbeitungszeit, Anspringtemperatur und Vernetzungsgeschwindigkeit der erfindungsgemäßen Massen dienen, wie z.B. acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Trialkylcyanurate, Alkylmaleate, wie Diallylmaleate, Dimethylmaleat und Diethylmaleat, Alkylfumerate, wie Diallylfumarat und Diethylfumarat, organische Hydroperoxide, wie Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime.

Bevorzugt handelt es sich bei den erfindungsgemäß gegebenenfalls eingesetzten Inhibitoren (F) um Ethinylcyclohexanol, 2-Methyl-3-butin-2-ol und Alkylmaleate, wobei Ethinylcyclohexanol und 2-Methyl-3-butin-2-ol besonders bevorzugt sind.

Die erfindungsgemäßen Massen enthalten Komponente (F) in Mengen von bevorzugt 0,01 bis 3 Gewichtsteilen, besonders bevorzugt 0,02 bis 1 Gewichtsteilen, insbesondere 0,03 bis 0,5 Gewichtsteilen-, jeweils bezogen auf 100 Gewichtsteile Komponente (A).

Als gegebenenfalls eingesetzte Füllstoffe (G) können alle Füllstoffe eingesetzt werden, die auch bisher in vernetzbaren Massen eingesetzt worden sind. Beispiele für Füllstoffe sind verstärkende Füllstoffe, also Füllstoffe mit einer BET-Oberfläche von mindestens 30 m²/g, wie beispielsweise Ruße, pyrogen hergestellte Kieselsäure, gefällte Kieselsäure und Silicium-Aluminium-Mischoxide, wobei die genannten Füllstoffe hydrophobiert sein können, sowie nicht verstärkenden Füllstoffe, also Füllstoffe mit einer BET-Oberfläche von weniger als 30 m²/g, wie beispielsweise Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminiumsilikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln.

Bevorzugt handelt es sich bei Füllstoff (G) um pyrogen hergestellte Kieselsäuren oder gefällte Kieselsäuren, wobei pyrogen hergestellte Kieselsäure mit einer BET-Oberfläche von 30 bis 300 m²/g besonders bevorzugt ist.

Falls die erfindungsgemäßen Massen Füllstoffe (G) enthalten, was bevorzugt ist, handelt es sich um Mengen von vorzugsweise 1 bis 50 Gewichtsteile, bevorzugt 2 bis 30 Gewichtsteile, jeweils bezogen auf 100 Gewichtsteile vernetzbare Masse.

Als gegebenenfalls in den erfindungsgemäßen Massen eingesetzte Haftvermittler (H) können alle Haftvermittler verwendet werden, die auch bisher in durch Anlagerung von Si-gebundenem Wasserstoff an aliphatische Mehrfachbindung vernetzbaren Massen eingesetzt worden sind. Vorzugsweise handelt es sich um Silanhaftvermittler, wie beispielsweise Vinyltrialkoxysilane, Methacryloxypropyltrialkoxysilane, Epoxypropyltrialkoxysilane, Silane mit Acetoxygruppen sowie Gemische daraus.

Besonders bevorzugt handelt es sich bei den erfindungsgemäß eingesetzten Haftvermittlern (H) um Epoxypropyltriethoxysilan, Epoxypropyltrimethoxysilan und Vinyltriacetoxysilan.

Falls in den erfindungsgemäßen Massen Haftvermittler (H) eingesetzt werden, was bevorzugt ist, handelt es sich um Mengen von bevorzugt 0,01 bis 20 Gewichtsteilen, besonders bevorzugt 0,05 bis 10 Gewichtsteile, insbesondere 0,1 bis 5 Gewichtsteile, jeweils bezogen auf 100 Gewichtsteile Komponente (A).

Als gegebenenfalls in den erfindungsgemäßen Massen eingesetzte weitere Stoffe (I) können alle dafür bekannten Lösungsmittel, Pigmente, Farbstoffe, Weichmacher, organische Polymere, Hitzestabilisatoren oder Duftstoffe verwendet werden, die auch bisher in durch Anlagerung von Si-gebundenem Wasserstoff an aliphatische Mehrfachbindung vernetzbaren Massen eingesetzt worden sind und unterschiedlich sind zu Komponenten (A) bis (H).

Beispiele für Lösungsmittel sind Aliphaten mit 7 bis 20 Kohlenstoffatomen, Toluol, Xylol, Säureester, wie z.B. Essigsäureethylester, oder Ketone, wie Methlyethylketon.

Beispiele für Weichmacher sind nicht funktionelle trimethylterminierte Polydimethylsiloxane, Aliphaten mit 15 bis 30 Kohlenstoffatomen und nicht funktionelle Methylphenylpolysiloxane.

Beispiele für organische Polymere sind Polyacrylate, Polyurethane, Polyacrylnitril und Polycarbonate sowie Polyester.

Beispiele für Hitzestabilisatoren sind Ceroxide, organische Cerverbindungen, wie Ceroctoat, Eisenoxide und Titanoxide.

Falls in den erfindungsgemäßen Massen weitere Stoffe (I) eingesetzt werden, handelt es sich bevorzugt um Lösemittel, wie aliphatische Benzine, Toluol, Xylol oder Säureester, wie Ethylacetat.

Falls in den erfindungsgemäßen Massen weitere Stoffe (I) eingesetzt werden, was nicht bevorzugt ist , handelt es sich um Mengen von bevorzugt 0,01 bis 60 Gewichtsteilen, besonders bevorzugt 0,05 bis 50 Gewichtsteile, insbesondere 0,1 bis 30 Gewichtsteile, jeweils bezogen auf 100 Gewichtsteile Komponente (A).

Die erfindungsgemäßen Massen sind bevorzugt bei Raumtemperatur und dem Druck der Umgebung flüssig bzw. gießbar. Sie haben eine Viskosität von vorzugsweise 20 bis 1 000 000 mm²/s, besonders bevorzugt 50 bis 500 000 mm²/s, jeweils bei 25°C.

Besonders bevorzugt handelt es sich bei den erfindungsgemäßen Massen um solche, die aus
(A) Organosiliciumverbindungen aus Einheiten der Formel (I)
(B) Organopolysiloxane mit Si-gebundenen Wasserstoffatomen,
(D) die Anlagerung von Si-gebundenem Wasserstoff an aliphatische Mehrfachbindung fördernden Katalysatoren,
(E) sylilierte Zitronensäure nach Formel (III), bevorzugt Trimethylsilylzitronensäure, Bistrimethylsilylzitronensäure, Tristrimethylsilylzitronensäure oder Tetrakistrimethylsilylzitronensäure
(F) Inhibitoren,
   gegebenenfalls
(G) Füllstoffe,
   gegebenenfalls
(H) Haftvermittler und
   gegebenenfalls
(I) weiteren Stoffen, die von den Komponenten (A) bis (H) verschieden sind, ausgewählt aus Lösungsmitteln, Pigmenten, Farbstoffen, Weichmachern, organischen Polymeren, Hitzestabilisatoren und Duftstoffen, bestehen.

Insbesondere handelt es sich bei den erfindungsgemäßen Massen um solche, die aus
(A) vinylterminierten Diorganopolysiloxanen,
(B) Organopolysiloxanen mit Si-gebundenen Wasserstoffatomen
(D) die Anlagerung von Si-gebundenem Wasserstoff an aliphatische Mehrfachbindung fördernden Katalysatoren,
(E) sylilierte Zitronensäure nach Formel (III), bevorzugt Trimethylsilylzitronensäure, Bistrimethylsilylzitronensäure, Tristrimethylsilylzitronensäure oder Tetrakistrimethylsilylzitronensäure
(F) Inhibitoren,
(G) Füllstoffe,
(H) Silanhaftvermittler
   sowie
   gegebenenfalls
(I) weiteren Stoffen, die von den Komponenten (A) bis (H) verschieden sind, ausgewählt aus Lösungsmitteln, Pigmenten, Farbstoffen, Weichmachern, organischen Polymeren, Hitzestabilisatoren, nichtverstärkenden Füllstoffen oder Duftstoffen, bestehen.

Bei den erfindungsgemäß eingesetzten Komponenten (A) bis (I) kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen Organopolysiloxanmassen kann nach bekannten Verfahren erfolgen, wie beispielsweise durch gleichmäßige Vermischung der einzelnen Komponenten in beliebiger Reihenfolge.

Je nach Konsistenz und Viskosität der eingesetzten Komponenten kann der Mischprozess dabei mit einfachen Rührgeräten, wie z.B. Flügelrührer, Planetenmischer, Turborührer oder Dissolver, an Walzwerken, Kneter, Z-Mischer oder Kugelmühlen erfolgen. Das Rührgefäß kann offen oder geschlossen sein. Der Mischvorgang wird bevorzugt bei Raumtemperatur durchgeführt, jedoch sind auch Temperaturen im Bereich von -40°C bis 150°C möglich. Die erfindungsgemäß eingesetzte Säure (E) kann dabei in die bereits alle anderen Komponenten enthaltende Siliconkautschukformulierung eingemischt werden oder in eines bzw. mehrere der entsprechenden Vormischungen. Auch während der Herstellung der Siliconkautschukmischung kann die Komponente E eingearbeitet werden. Falls erwünscht, kann die Komponente (E) auch mit Lösungsmitteln vermischt eingesetzt werden.

Bevorzugt wird der Mischvorgang zur Herstellung der erfindungsgemäßen Massen beim Druck der umgebenden Atmosphäre, also etwa 900 bis 1100 hPa, durchgeführt, wobei, falls erwünscht, auch ein erhöhter oder verminderter Druck sowie Schutzgas angewendet werden kann. Wenn die erfindungsgemäß eingesetzte organische Säure (E) mit Lösungsmittel vermischt zugefügt wird, kann - falls erwünscht - durch Anlegen von Vakuum und/oder Erhöhung der Mischtemperatur das Lösungsmittel wieder entfernt werden.

Der Mischprozess zur Herstellung der erfindungsgemäßen Massen kann diskontinuierlich oder auch kontinuierlich in dafür geeigneten Anlagen durchgeführt werden. Beispiele für solche Anlagen sind Busskneter sowie statische oder dynamische Durchflussmischer.

Die erfindungsgemäßen durch Anlagern von Si-gebundenem Wasserstoff an aliphatische Mehrfachbindung vernetzbaren Massen können unter den gleichen Bedingungen vernetzen gelassen werden, wie die bisher bekannten durch Hydrosilylierungsreaktion vernetzbaren Massen. Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Ein weiterer Gegenstand der vorliegenden Erfindung sind Formkörper hergestellt durch Vernetzung der erfindungsgemäßen Massen.

Die erfindungsgemäßen Formkörper können dabei auf beliebige und an sich bekannte Weise hergestellt werden. Beispiele hierfür sind Kalandrieren, Formpressen, Formspritzen, Extrudieren, Gießen. Die erfindungsgemäßen Massen können auch zum Beschichten von Oberflächen verwendet werden.

Die erfindungsgemäßen Massen sowie die erfindungsgemäß daraus hergestellten Vernetzungsprodukte können für alle Zwecke eingesetzt werden, für die auch bisher zu Elastomeren vernetzbare Organopolysiloxanmassen bzw. Elastomere verwendet wurden. Insbesondere geeignet sind die erfindungsgemäßen Massen zur Beschichtungen von textilen Flächengebilden, wie z.B. Geweben, Vliesen, Gestricken, Gelegen, Wirkwaren, Filzen oder Kettwirkwaren. Die textilen Flächengebilde können dabei gefertigt sein aus Naturfasern, wie Baumwolle, Wolle, Seide etc., oder auch aus Kunstfasern wie Polyester, Polyamid, Aramid etc. Auch aus Mineralfasern, wie Glas oder Silicaten oder Metallfasern können die Textilien gefertigt sein. Des Weiteren können die erfindungsgemäßen Massen auch zum Beschichten von Folien oder Oberflächen aus mineralischen Stoffen, Kunststoffen, Naturstoffen oder Metallen verwendet werden.

Ein weiterer Gegenstand der vorliegenden Erfindung ist ein Verfahren zur Beschichtung von textilen Flächengebilden, dadurch gekennzeichnet, dass die erfindungsgemäße Masse auf das textile Flächengebilde aufgebracht und vernetzen gelassen wird.

Die erfindungsgemäße Beschichtung kann auf an sich bekannte Weise, wie z.B. im Rakelverfahren, Tauchverfahren, Extrusionsverfahren, Spritz- oder Sprühverfahren, aufgebracht werden. Auch alle Arten von Rollenbeschichtungen, wie Gravurwalzen, Pflatschen oder Auftrag über Mehrwalzensysteme sowie Siebdruck sind möglich.

Die erfindungsgemäße Beschichtung erfolgt bevorzugt bei Temperaturen von 10 bis 50°C und einem Druck der umgebenden Atmosphäre, also etwa 900 bis 1100 hPa.

Die erfindungsgemäßen Massen eignen sich auch zum Laminieren und zur Verarbeitung im Transferverfahren.

Die mit den erfindungsgemäßen Massen beschichteten textilen Flächengebilde können überall da eingesetzt werden, wo bereits beschichtete Gewebe zum Einsatz kommen. Die erfindungsgemäßen beschichteten Gewebe können bevorzugt da eingesetzt werden, wo besonders geruchsneutrale Beschichtungen mit niedrigen Emissionswerten und guter Haftung zum Untergrund gefordert sind. Beispiele hierfür sind Kompensatoren für öffentliche Verkehrsmittel oder öffentliche Gebäude, Vorhänge, Lichtschutztextilien, Markisen oder Sicherheitsrückhaltesysteme in Automobilen.

Die erfindungsgemäßen vernetzbaren Massen haben den Vorteil, dass sie in einem einfachen Verfahren unter Verwendung leicht zugänglicher Ausgangsstoffe und damit wirtschaftlich hergestellt werden können.

Die erfindungsgemäßen vernetzbaren Massen haben den Vorteil, dass sie eine gute Lagerstabilität aufweisen.

Die erfindungsgemäßen Massen haben den Vorteil, dass sie an üblichen Anlagen einfach verarbeitet werden können.

Die erfindungsgemäßen Formkörper haben den Vorteil, dass sie verminderte Emissionswerte aufweisen.

Die erfindungsgemäßen Formkörper haben den Vorteil, dass sie reduzierten Eigengeruch aufweisen.

Das erfindungsgemäße Verfahren hat den Vorteil, dass erhöhte Verarbeitungsgeschwindigkeiten möglich sind.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Die Synthese von Tetrakistrimethylsilylzitronensäure wird wie folgt durchgeführt:

20,0 g Zitronensäure (wasserfrei) werden in 150 g Tetrahydrofuran gelöst und die resultierende Mischung auf 80°C erwärmt. Innerhalb von 30 min werden 50,4 g Hexamethyldisilazan dosiert. Das Reaktionsgemisch wird 4 h gerührt, anschließend werden an einem Rotationsverdampfer bei einer Temperatur von 80°C und 10 mbar die leicht flüchtigen Bestandteile abdestilliert. Man erhält 46,8 g der Zielverbindung als eine leicht bewegliche Flüssigkeit (Ausbeute: 93%, Reinheit: 97% nach GC). ¹H-NMR (CDCl3): 0,12 ppm [9 H, C-OSi(CH₃)₃]; 0,26 [18 H, C(O)OSi(CH₃)₃, terminal]; 0,28 [9 H, C(O)OSi(CH₃)₃, intern]. 29Si-NMR (CDCl3): 12,5 ppm; 23,0; 25,4.

Trimethylsilylzitronensäure, Bistrimethylsilylzitronensäure und Tristrimethylsilylzitronensäure werden nach gleichem Verfahren durch Anpassung der Stöchiometrie hergestellt.

Im Rahmen der vorliegenden Erfindung sind, falls jeweils nicht anders angegeben, alle Mengen- und Prozentangaben auf das Gewicht und alle Prozentangaben sind auf das Gesamtgewicht bezogen, alle Temperaturen 20°C und alle Drücke entsprechender umgebenden Atmosphäre also 900 bis 1100 hPa1. Alle Viskositäten werden bei 25°C bestimmt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und sofern nicht anders angegeben bei Raumtemperatur, also etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Im Folgenden beziehen sich alle Viskositätsangaben auf eine. Temperatur von 25°C.

### Beispiel 1

### Herstellung einer additionsvernetzenden Grundmasse (im Folgenden "Grundmasse" genannt)

120 g eines α,ω-vinyldimethylsiloxy-terminierten Polydimethylsiloxans mit einer Viskosität von 20 000 mPa·s werden mit 156 g eines α,ω-Vinyldimethylsiloxy-terminierten Polydimethylsiloxans mit einer Viskosität von 1000 mPa·s und 55 g einer hochdispersen Kieselsäure mit einer BET-Oberfläche von 300 g/m² vermischt.

In diese Mischung werden 0,06 g eines Platin-Divinyltetramethylsiloxan-Komplexes gelöst in Dimethylpolysiloxan, so dass in der Masse ein Platingehalt von 18 ppm vorhanden ist, 10 g eines Methylhydrogenpolysiloxanes mit Trimethylendgruppen und einer Viskosität von 45 mPa·s und 1,5 g Ethinylcyclohexanol eingearbeitet.

Zu 100 g der so hergestellten Grundmasse werden 1 g Tetrakistrimethylsilylzitronensäure gegeben und vermischt.

### Beispiel 2

Zu 100 g der so hergestellten Grundmasse aus Beispiel 1 werden 2 g Tetrakistrimethylsilylzitronensäure gegeben und vermischt.

### Beispiel 3

Zu 100 g der Grundmasse aus Beispiel 1 werden 1 g Tristrimethylsilylzitronensäure gegeben und vermischt

### Beispiel 4

Zu 100 g der Grundmasse aus Beispiel 1 werden 2 g Trimethylsilylzitronensäure gegeben und vermischt.

### Beispiel 5

### Ermittlung der benötigten Vulkanisationszeit bei einer Vulkanisationstemperatur von 180°C

Die Mischungen gemäß Beispiele 1 bis 4 sowie die Grundmasse als solche im Vergleich **(Vergleichsbeispiel 1 (V1))** werden jeweils mit einem Rakel auf ein Gewebe aus Polyamid 6.6 aufgetragen und bei 180°C vulkanisiert.

Das so beschichtete Gewebe wird dem Extraktionstest unterzogen und wie unten beschrieben die benötigte Verweilzeit ermittelt bis die extrahierbaren Anteile < 10 % sind.

Als Indikator für den Status der Vulkanisation wurden die extrahierbaren Anteile des vernetzten Siliconkautschuks ermittelt. Dazu wird ein beschichtetes Gewebe 24 Stunden in Methylisobutylketon gelagert und im Lösemittel der Silicongehalt bestimmt.

Es wurde die benötigte Vulkanisationszeit zum Erreichen von 10 % extrahierbaren Anteilen ermittelt. Die Ergebnisse finden sich in Tabelle 1.

**Tabelle 1**

| | |
|---|---|
| Beschichtung gemäß Vergleichsbeispiel 1 | 46 Sekunden |
| Beschichtung gemäß Beispiel 1 | 13 Sekunden |
| Beschichtung gemäß Beispiel 2 | 15 Sekunden |
| Beschichtung gemäß Beispiel 3 | 19 Sekunden |
| Beschichtung gemäß Beispiel 4 | 18 Sekunden |

### Beispiel 6

### Ermittlung der Geruchsentwicklung nach der Beschichtung

Die Mischungen gemäß Beispiele 1 bis 4 sowie die Grundmasse als solche im Vergleich **(Vergleichsbeispiel 1)** werden jeweils mit einem Rakel auf ein stuhlrohes, nicht gewaschenes Nylongewebe aufgetragen und 60 Sekunden bei 180°C vulkanisiert.

Das so beschichtete Gewebe zeigt im nachfolgend beschriebenen Geruchstest deutlich reduzierten Geruch.

100 cm² des beschichteten Gewebes wurden jeweils in ein Glas gegeben und verschlossen 24 Stunden gelagert. Dann wurden die Gläser geöffnet und der Geruch beurteilt. Die Ergebnisse finden sich in Tabelle 2.

**Tabelle 2**

| | |
|---|---|
| Beschichtung aus Vergleichsbsp. V1 | Starker, fischartiger Geruch |
| Beschichtung aus Beispiel 1 | Kein Geruch feststellbar |
| Beschichtung aus Beispiel 2 | Kein Geruch feststellbar |
| Beschichtung aus Beispiel 3 | Schwacher Geruch, deutlich weniger als bei V1 |
| Beschichtung aus Beispiel 4 | Schwacher Geruch, deutlich weniger als bei V1 |

### Beispiel 7

### Ermittlung der Haftung der Beschichtung zum Untergrund

Die Mischungen gemäß Beispiele 1 bis 4 sowie die Grundmasse als solche im Vergleich **(Vergleichsbeispiel 1)** werden jeweils mit einem Rakel auf ein gewaschenes Nylongewebe aufgetragen und 30 Sekunden bei 180°C vulkanisiert.

Das so beschichtete Gewebe zeigt deutlich bessere Werte im Test nach ISO 5981.

Die beschichteten Gewebemuster werden jeweils nach ISO 5981 dadurch geprüft, dass beschichtete Gewebemuster in einem Scrubtester unter einem Metallreibschuh und 1 kg Gewichtsauflage diagonal gegenläufig bewegt werden. Die Ergebnisse finden sich in Tabelle 3.

**Tabelle 3**

| | |
|---|---|
| Beschichtung aus Vergleichsbeispiel 1 | 200 Scrubs |
| Beschichtung aus Beispiel 1 | 1800 Scrubs |
| Beschichtung aus Beispiel 2 | 1600 Scrubs |
| Beschichtung aus Beispiel 3 | 1400 Scrubs |
| Beschichtung aus Beispiel 4 | 1400 Scrubs |

### Beispiel 8

Die Mischungen gemäß Beispiele 1 bis 4 sowie die Grundmasse als solche im Vergleich **(Vergleichsbeispiel 1)** werden jeweils mit einem Rakel auf ein gewaschenes Nylongewebe aufgetragen und 30 Sekunden bei verschiedenen Temperaturen vulkanisiert.

Das so beschichtete Gewebe benötigt kurze Vulkanisationszeiten.

Als Indikator für die Qualität der Vernetzung wurden wiederum die extrahierbaren Anteile bestimmt. An den beschichteten Gewebemustern wurde jeweils der in Beispiel 5 beschriebene Extraktionstest durchgeführt.

Tabelle 4 zeigt die benötigte Temperatur um in 30 Sekunden einen Extraktwert von unter 10 % zu erreichen.

**Tabelle 4**

| | |
|---|---|
| Beschichtung aus Vergleichsbeispiel 1 | 185°C |
| Beschichtung aus Beispiel 1 | 152°C |
| Beschichtung aus Beispiel 2 | 154°C |
| Beschichtung aus Beispiel 3 | 158°c |
| Beschichtung aus Beispiel 4 | 161°C |

### Beispiel 9

### Ermittlung der Emissionen (Flüchtige Anteile) in den beschichteten Geweben

Die Mischungen gemäß Beispiele 1 bis 4 sowie die Grundmasse als solche im Vergleich **(Vergleichsbeispiel 1)** werden jeweils mit einem Rakel auf ein Nylongewebe aufgetragen und 1 Minute bei 180°C vulkanisiert.

Das so beschichtete Gewebe zeigt deutlich reduzierte Emissionswerte.

Die Emissionen an den Gewebemustern wurden nach VDA 277 / 278 dadurch bestimmt, dass nach dem Thermodesorptionsverfahren die flüchtigen Anteile (als Gesamtkohlenstoff) mit Hilfe einer GC - MS Kopplung ermittelt wurden. Die Ergebnisse finden sich in Tabelle 5.

**Tabelle 5**

| | |
|---|---|
| Beschichtung aus Vergleichsbeispiel 1 | 124 ppm |
| Beschichtung aus Beispiel 1 | 28 ppm |
| Beschichtung aus Beispiel 2 | 19 ppm |
| Beschichtung aus Beispiel 3 | 36 ppm |
| Beschichtung aus Beispiel 4 | 37 ppm |

## Patentansprüche

1. Vernetzbare Siliconmassen, die durch Anlagerung von Si-gebundenem Wasserstoff an aliphatische Mehrfachbindung vernetzbar sind und silylierte Zitronensäure enthalten.

2. Vernetzbare Massen gemäß Anspruch 1, **dadurch gekennzeichnet, dass** es sich bei der silylierten Zitronensäure um solche der Formel A-OC(COOA)(CH₂COOA)₂ (III) handelt,
wobei A = H oder SiR₃ ist, mit der Maßgabe, dass zumindest ein A die Bedeutung von SiR₃ hat und R ein Kohlenwasserstoffrest
mit 1 bis 10 C Atomen ist.

3. Vernetzbare Massen gemäß Anspruch 1 oder 2, **dadurch gekennzeichnet, dass** es sich bei der silylierten Zitronensäure um Trimethylsilylzitronensäure, Bistrimethylsilylzitronensäure, Tristrimethylsilylzitronensäure oder Tetrakistrimethylsilylzitronensäure handelt.

4. Vernetzbare Massen gemäß Anspruch 1 bis 3, **dadurch gekennzeichnet, dass** es sich um solche handelt enthaltend
(A) Organosiliciumverbindungen, die SiC-gebundene Reste mit aliphatischen Mehrfachbindungen aufweisen,
(B) Organosiliciumverbindungen mit Si-gebundenen Wasserstoffatomen oder anstelle von (A) und (B)
(C) Organosiliciumverbindungen, die SiC-gebundene Reste mit aliphatischen Mehrfachbindungen und Si-gebundene Wasserstoffatome aufweisen,
(D) die Anlagerung von Si-gebundenem Wasserstoff an aliphatische Mehrfachbindung fördernden Katalysator und
(E) silylierte Zitronensäure nach Formel (III).

5. Vernetzbare Massen gemäß einem oder mehreren der Ansprüche 1 bis 4, **dadurch gekennzeichnet, dass** es sich bei Organosiliciumverbindungen (A) um Siloxane aus Einheiten der Formel
RₐR¹_{b}SiO_{(4-a-b)/2} (II)
handelt, wobei
R gleich oder verschieden sein kann und einen von aliphatischen Kohlenstoff-Kohlenstoff-Mehrfachbindungen freien Rest bedeutet,
R¹ gleich oder verschieden sein kann und einen einwertigen, gegebenenfalls substituierten, SiC-gebundenen Kohlenwasserstoffrest mit aliphatischer Kohlenstoff-Kohlenstoff-Mehrfachbindung bedeutet,
a 0, 1, 2 oder 3 ist und
b 0, 1 oder ist,
mit der Maßgabe, dass die Summe a+b kleiner oder gleich 3 ist und mindestens 2 Reste R¹ je Molekül vorliegen.

6. Vernetzbare Massen gemäß einem oder mehreren der Ansprüche 1 bis 5, **dadurch gekennzeichnet, dass** es sich um solche handelt, die aus
(A) Organosiliciumverbindungen aus Einheiten der Formel (II)
(B) Organopolysiloxane mit Si-gebundenen Wasserstoffatomen,
(D) die Anlagerung von Si-gebundenem Wasserstoff an aliphatische Mehrfachbindung fördernden Katalysatoren,
(E) silylierte Zitronensäure nach Formel (III) gegebenenfalls
(F) Inhibitoren,
gegebenenfalls
(G) Füllstoffe,
gegebenenfalls
(H) Haftvermittler und
gegebenenfalls
(I) weiteren Stoffen, die von den Komponenten (A) bis (H) verschieden sind, ausgewählt aus Lösungsmitteln, Pigmenten, Farbstoffen, Weichmachern, organischen Polymeren, Hitzestabilisatoren und Duftstoffen, bestehen.

7. Formkörper hergestellt durch Vernetzung der Massen gemäß einem oder mehreren der Ansprüche 1 bis 6.

8. Verfahren zur Beschichtung von textilen Flächengebilden, **dadurch gekennzeichnet, dass** Massen gemäß einem oder mehreren der Ansprüche 1 bis 6 auf das textile Flächengebilde aufgebracht und vernetzen.

## Claims

1. Silicone composition crosslinkable by addition of Si-bound hydrogen onto aliphatic multiple bonding and comprising silylated citric acid.

2. Crosslinkable composition according to Claim 1, **characterized in that** the silylated citric acid is of the formula A-OC(COOA)(CH₂COOA)₂ (III),
where A = H or SiR₃, with the proviso that at least one A has the meaning SiR₃ and R is a hydrocarbyl radical of 1 to 10 carbon atoms.

3. Crosslinkable composition according to Claim 1 or 2, **characterized in that** the silylated citric acid is trimethylsilylcitric acid, bistrimethylsilylcitric acid, tristrimethylsilylcitric acid or tetrakistrimethylsilylcitric acid.

4. Crosslinkable composition according to Claim 1 to 3, **characterized in that** it comprises
(A) an organosilicon compound having an SiC-bound radical with aliphatic multiple bonding,
(B) an organosilicon compound having an Si-bound hydrogen atom or in lieu of (A) and (B)
(C) an organosilicon compound having an SiC-bound radical with aliphatic multiple bonding and an Si-bound hydrogen atom,
(D) a catalyst that promotes the addition of Si-bound hydrogen onto aliphatic multiple bonding, and
(E) silylated citric acid of formula (III).

5. Crosslinkable composition according to one or more of the Claims 1 to 4, **characterized in that** said organosilicon compound (A) comprises a siloxane comprising a unit of the formula
RₐR¹_{b}SiO_{(4-a-b)/2} (II)
where
R in each occurrence may be the same or different and is a radical free of an aliphatic carbon-carbon multiple bond,
R¹ in each occurrence may be the same or different and is a univalent, optionally substituted, SiC-bound hydrocarbyl radical with aliphatic carbon-carbon multiple bonding,
a is 0, 1, 2 or 3, and
b is 0, 1 or 2,
with the proviso that the sum total of a+b is not more than 3 and there are at least 2 R¹ radicals per molecule.

6. Crosslinkable composition according to one or more of the Claims 1 to 5, **characterized in that** it consists of
(A) an organosilicon compound comprising a unit of the formula (II),
(B) an organopolysiloxane having an Si-bound hydrogen atom,
(D) a catalyst that promotes the addition of Si-bound hydrogen onto aliphatic multiple bonding,
(E) silylated citric acid of formula (III), if appropriate
(F) an inhibitor,
if appropriate
(G) a filler,
if appropriate
(H) an adhesion promoter and
if appropriate
(I) further materials other than said components (A) to (H) and selected from solvents, pigments, dyes, plasticizers, organic polymers, heat stabilizers and scents.

7. Shaped article obtained by crosslinking the composition according to one or more of the Claims 1 to 6.

8. Process for coating a textile fabric, **characterized in that** it comprises a composition according to one or more of the Claims 1 to 6 being applied to said textile fabric and allowed to crosslink.

## Revendications

1. Masses de silicone réticulables, qui sont réticulables par addition d'hydrogène lié par Si sur une liaison aliphatique multiple et qui contiennent de l'acide citrique silylé.

2. Masses réticulables selon la revendication 1, **caractérisées en ce qu'**il s'agit, pour l'acide citrique silylé, de celui de formule A-OC(COOA)(CH₂COOA)₂ (III), où A = H ou SiR₃, à condition qu'au moins un A présente la signification de SiR₃ et R représente un radical hydrocarboné comprenant 1 à 10 atomes de carbone.

3. Masses réticulables selon la revendication 1 ou 2, **caractérisées en ce qu'**il s'agit, pour l'acide citrique silylé, d'acide triméthylsilylcitrique, d'acide bistriméthylsilylcitrique, d'acide tristriméthylsilylcitrique ou d'acide tétrakistriméthylsilylcitrique.

4. Masses réticulables selon la revendication 1 à 3, **caractérisées en ce qu'**il s'agit de celles contenant
(A) des composés organosiliciés, qui présentent des radicaux liés par SiC comprenant des liaisons aliphatiques multiples,
(B) des composés organosiliciés présentant des atomes d'hydrogène liés par Si ou, au lieu de (A) et (B)
(C) des composés organosiliciés qui présentent des radicaux liés par SiC présentant des liaisons aliphatiques multiples et des atomes d'hydrogène liés par Si,
(D) un catalyseur favorisant l'addition d'hydrogène lié par Si sur une liaison aliphatique multiple et
(E) de l'acide citrique silylé selon la formule (III).

5. Masses réticulables selon l'une ou plusieurs des revendications 1 à 4, **caractérisées en ce qu'**il s'agit, pour les composés organosiliciés (A), de siloxanes d'unités de formule
RₐR¹_{b}SiO_{(4-a-b)/2} (II)
où
R peut être identique ou différent et signifie un radical exempt de liaisons carbone-carbone aliphatiques multiples,
R¹ peut être identique ou différent et signifie un radical hydrocarboné monovalent, le cas échéant substitué, lié par SiC, présentant une liaison carbone-carbone aliphatique multiple,
a vaut 0, 1, 2 ou 3 et
b vaut 0, 1 ou 2
à condition que la somme de a + b soit inférieure ou égale à 3 et qu'il existe au moins 2 radicaux R¹ par molécule.

6. Masses réticulables selon l'une ou plusieurs des revendications 1 à 5, **caractérisées en ce qu'**il s'agit de celles qui sont constituées par
(A) des composés organosiliciés constitués par des unités de formule (II),
(B) des organopolysiloxanes présentant des atomes d'hydrogène liés par Si,
(D) des catalyseurs favorisant l'addition d'hydrogène lié par Si sur une liaison aliphatique multiple,
(E) de l'acide citrique silylé selon la formule (III), le cas échéant
(F) des inhibiteurs, le cas échéant
(G) des charges, le cas échéant
(H) des promoteurs d'adhérence et le cas échéant
(I) d'autres substances qui sont différentes des composants (A) à (H), choisies parmi les solvants, les pigments, les colorants, les plastifiants, les polymères organiques, les stabilisants thermiques et les parfums.

7. Corps façonnés, préparés par réticulation des masses selon l'une ou plusieurs des revendications 1 à 6.

8. Procédé pour le revêtement de structures planes textiles, **caractérisé en ce que** des masses selon l'une ou plusieurs des revendications 1 à 6 sont appliquées sur la structure plane textile et sont réticulées.
